(19) Europäisches Patentamt
European Patent Office
Office européen des brevets

(11) **EP 2 920 923 B1**

(12) **EUROPÄISCHE PATENTSCHRIFT**

(45) Veröffentlichungstag und Bekanntmachung des Hinweises auf die Patenterteilung:
**18.09.2019   Patentblatt 2019/38**

(21) Anmeldenummer: **13805226.1**

(22) Anmeldetag: **18.11.2013**

(51) Int Cl.:
*H04L 12/40* *(2006.01)*      *H04L 12/58* *(2006.01)*
*H04L 12/815* *(2013.01)*

(86) Internationale Anmeldenummer:
**PCT/AT2013/050224**

(87) Internationale Veröffentlichungsnummer:
**WO 2014/075122 (22.05.2014 Gazette 2014/21)**

(54) **VERFAHREN UND COMPUTERNETZWERK ZUR ÜBERTRAGUNG VON ECHTZEITNACHRICHTEN**

METHOD AND COMPUTER NETWORK FOR THE TRANSMISSION OF REAL-TIME MESSAGES

PROCÉDÉ ET RÉSEAU INFORMATIQUE POUR LA TRANSMISSION DE MESSAGES TEMPS RÉEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2012   AT 505222012**

(43) Veröffentlichungstag der Anmeldung:
**23.09.2015   Patentblatt 2015/39**

(73) Patentinhaber: **TTTech Computertechnik AG**
**1040 Wien (AT)**

(72) Erfinder:
 • **STEINER, Wilfried**
 **A-1040 Wien (AT)**
 • **BAUEr, Günther**
 **A-1040 Wien (AT)**
 • **REBERNIG, Stefan**
 **A-1170 Wien (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
 • EKARIN SUETHANUWONG: "Scheduling time-triggered traffic in TTEthernet systems", PROCEEDINGS OF 2012 IEEE 17TH INTERNATIONAL CONFERENCE ON EMERGING TECHNOLOGIES & FACTORY AUTOMATION (ETFA 2012) : KRAKOW, POLAND, 17 - 21 SEPTEMBER 2012, IEEE, PISCATAWAY, NJ, 17. September 2012 (2012-09-17), Seiten 1-4, XP032350288, DOI: 10.1109/ETFA.2012.6489749 ISBN: 978-1-4673-4735-8
 • "Scalable Real-Time Ethernet Platform Ensuring Reliable Networks A Powerful Network Solution for All Purposes", , 1. Januar 2009 (2009-01-01), XP055102723, Gefunden im Internet: URL:http://www.ttagroup.org/ttethernet/doc/TTEthernet_Article.pdf [gefunden am 2014-02-18]
 • "802-1qav-d7-0 ; 802-1qav-d7-0", IEEE DRAFT; 802-1QAV-D7-0, IEEE-SA, PISCATAWAY, NJ USA, Bd. 802.1, 1. Oktober 2009 (2009-10-01), Seiten 1-72, XP017635817, [gefunden am 2009-10-01]
 • ALDERISI GIULIANA ET AL: "Introducing support for scheduled traffic over IEEE audio video bridging networks", 2013 IEEE 18TH CONFERENCE ON EMERGING TECHNOLOGIES & FACTORY AUTOMATION (ETFA), IEEE, 10. September 2013 (2013-09-10), Seiten 1-9, XP032517084, ISSN: 1946-0740, DOI: 10.1109/ETFA.2013.6647943 [gefunden am 2013-10-24]

• CHRISTIAN BOIGER: "Meeting the AVB Gen2 Latency Requirements ; new-avb-boiger-meeting-gen2-latency-req-11 11", IEEE DRAFT; NEW-AVB-BOIGER-MEETING-GEN2-LATENCY-REQ-11 11, IEEE-SA, PISCATAWAY, NJ USA, Bd. 802.1, 8. November 2011 (2011-11-08), Seiten 1-23, XP068008271, [gefunden am 2011-11-08]

**Beschreibung**

Die Erfindung betrifft ein Verfahren zur Übertragung von Nachrichten in einem Computernetzwerk, wobei das Computernetzwerk aus einer Anzahl von Rechenknoten besteht, welche Rechenkoten über ein oder mehrere aktive Komponenten miteinander verbunden sind, wobei jeder Rechenknoten über eine Kommunikationsleitung mit einer aktiven Komponente verbunden ist, und wobei weiters von den Rechenknoten zumindest ein Teil der Nachrichten in Form von Echtzeit-Nachrichten ausgetauscht wird, wobei den Echtzeit-Nachrichten definierte Class Measurement Zeitintervalle konstanter Zeitdauer zugeordnet sind, und wobei die für Echtzeit-Nachrichten innerhalb eines CM-Zeitintervalle zur Verfügung stehende Bandbreite auf eine definierte Echtzeit-Bandbreite begrenzt ist.

Weiters betrifft die Erfindung ein Computernetzwerk zum Durchführen eines oben genannten Verfahrens zur Übertragung von Nachrichten, wobei das Computernetzwerk aus einer Anzahl von Rechenknoten besteht, welche Rechenkoten über ein oder mehrere aktive Komponenten miteinander verbunden sind, wobei jeder Rechenknoten über eine Kommunikationsleitung mit einer aktiven Komponente verbunden ist, und wobei weiters von den Rechenknoten zumindest ein Teil der Nachrichten in Form von Echtzeit-Nachrichten ausgetauscht wird, wobei den Echtzeit-Nachrichten definierte CM-Zeitintervalle konstanter Zeitdauer zugeordnet sind, und wobei die für Echtzeit-Nachrichten innerhalb eines CM-Zeitintervalle zur Verfügung stehende Bandbreite auf eine definierte Echtzeit-Bandbreite begrenzt ist.

In der Computertechnik haben sich unterschiedliche Standards zur Vernetzung einzelner Computer zu einem Computernetzwerk etabliert. Diese Standards orientieren sich an den Anforderungen der Applikationen, die in dem Computernetzwerk betrieben werden. Eine spezielle Klasse von Applikationen sind Echtzeitsysteme, in denen der Übertragungsdauer von Nachrichten im Netzwerk eine zentrale Eigenschaft beikommt. Als Beispiel eines Standards für Computernetzwerke, die für Echtzeitsysteme geeignet sind, sei hier der SAE AS6802 Standard erwähnt. Beispiele für Echtzeitsysteme sind: Steuerungssysteme an Bord eines Flugzeuges, Steuerungssysteme in industriellen Fertigungsanlagen, oder Industrieroboter.

Ein kostengünstiger Weg um die Übertragungsdauer, die Latenz, von Nachrichten in einem Computernetzwerk zu minimieren, besteht in der Implementierung von zeitgesteuerter Nachrichtenübertragung, d.h. von time-triggered communication. Mit zeitgesteuerter Nachrichtenübertragung werden alle Computer oder eine Gruppe von Computer, die durch eine Netzwerk zu einem Computernetzwerk verbunden sind, synchronisiert in der Gestalt, dass die synchronisierten Computer lokale Uhren implementieren, die sich zu jedem Zeitpunkt in Echtzeit nur mit einem berechenbaren Fehler im Zeitwert unterscheiden. Die synchronisierten Computer haben also eine gemeinsame Sicht der Zeit, wobei die Sicht einem kalkulierbaren, meist kleine - z.B. im Mikrosekunden-Bereich liegenden - Fehler unterliegt.

Des Weiteren wird bei zeitgesteuerter Kommunikation ein Kommunikationsplan, ein sogenanntes "Schedule", entwickelt. Dieses Schedule beschreibt, zu welchen Zeitpunkten in der synchronisierten Zeit welcher Computer welche Nachricht in das Netzwerk einspeist. Dadurch kann sichergestellt werden, dass die Zeitpunkte, zu denen ein Computer Nachrichten in das Computernetzwerk einspeist, hinreichend weit von Zeitpunkten entfernt ist, zu denen ein weiterer Computer Nachrichten in das Computernetzwerk einspeist, sodass die Nachrichten eines Computers und eines weiteren Computers nie zu gleichen Zeitpunkten Ressourcen des Netzwerkes belegen. Das Netzwerk selbst kann aktive Komponenten wie zum Beispiel Bridges oder Switches enthalten. In diesem Fall kann das Schedule auch die Zeitpunkte enthalten, zu denen Nachrichten weitergeleitet werden sollen. Der SAE AS6802 Standard beschreibt, wie die zeitgesteuerte Nachrichtenübertragung in einem Ethernet (IEEE 802.3) basierten Netzwerk implementiert werden kann.

Getrieben durch die immer stärker wachsende Bedeutung der Echtzeitsysteme versucht die Industrie nun, bestehende Netzwerkstandards, die in der IT verwendet werden, echtzeittauglich zu machen. Im Konkreten wurde der IEEE 802.1Q Standard ab der Version IEEE 802.1Q-2011 um Funktionen ergänzt, die das Echtzeitverhalten für eine begrenzte Anzahl von Nachrichten sicherstellen. Gemeinhin werden diese Funktionen unter dem Begriff "Audio-Video Bridging" (AVB) zusammengefasst.

In IEEE 802.1Q-2011 wird das Echtzeitverhalten durch folgende Funktionen und Konfigurationen erreicht:

    (a) Echtzeitnachrichten bekommen eine hohe - oder sogar die höchste - Priorität im Netzwerk,

    (b) Echtzeitnachrichten werden mit einer vorgegebenen nicht-synchronisierten Periode verschickt, und

    (c) die Bandbreite, die für Echtzeitnachrichten zur Verfügung steht, ist begrenzt und definiert.

Aus den Punkten (a) - (c) ergibt sich, dass sich die Latenz von Echtzeitnachrichten berechnen lässt und bei geeigneter Wahl der Parameter (Priorität, Periode und Bandbreite) ein ausreichend gutes Echtzeitverhalten erreichbar ist. Der Vollständigkeit halber sei hier erwähnt, dass IEEE 802.1Q-2011 keine zeitgesteuerte Nachrichtenübertragung implementiert, jedoch wird die Möglichkeit der Zeitsteuerung in IEEE 802.1Q in dem aktuellen Standardisierungsprojekt IEEE 802.1Qbv entwickelt.

Als Beispiel für eine Konfiguration nach IEEE 802.1Q-2011 sei hier die so genannte Service Klasse A "SR Class A" angeführt. Für SR Class A definiert IEEE 802.1Q-2011 folgende default Konfigurationen: (a) Priorität wird auf 3 gesetzt, (b) das Class Measurement Intervall (CMI), im Folgenden allgemein auch als CM-Zeitintervall bezeichnet, wird auf 125 Mikrosekunden gesetzt, und (c) die maximale Bandbreite für SR Class A wird auf 75% gesetzt. In einem solchen Setup wird laut Berechnungen der IEEE 802.1 Working Group eine garantierte Latenz von 2 Millisekunden in einem Netzwerk erreicht, wobei in dem Netzwerk zwischen dem Sender und dem Empfänger einer Echtzeitnachricht maximal sechs Bridges (auch Switches oder Sternkoppler genannt) liegen dürfen.

Weitere Versandmechanismen sind im 802-1QAV-D7-0 Standard (IEEE-SA, PISCATAWAY, NJ USA, Bd. 802.1, 1. Oktober 2009 (2009-10-01), Seiten 1-72, XP017635817) offenbart.

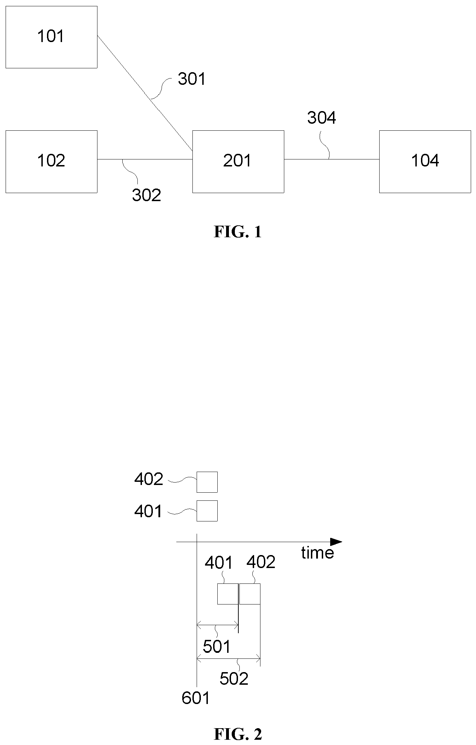

Ein Computer, der das AVB Protokoll implementiert, darf entsprechend alle 125 Mikrosekunden (für SR Class A) eine Nachricht mit einer bestimmten ID verschicken. Wenn zum Beispiel wie in Figur 1, welche den bekannten Stand der Technik darstellt, zwei Computer 101, 102 Nachrichten an eine Bridge 201 nach dem AVB Protokoll senden, so operieren die beiden Computer 101, 102 jeweils für sich, aber nicht gemeinsam. Die Computer 101, 102 können somit Nachrichten senden, die zu den gleichen Zeitpunkten bei der Bridge 201 ankommen. Im Worst-Case, wenn beide Computer Nachrichten periodisch senden, trifft das für alle Nachrichten von 101, 102 zu.

Das CM-Zeitintervall definiert den Durchrechnungszeitraum des Bandbreitenparameters. In AVB wird in den Bridges dynamisch Bandbreite für Streams reserviert. Das heißt, wenn beispielsweise ein Talker an seiner Bridge einen Stream S1 mit dem Inhalt, dass er für S1 alle 125 Mikrosekunden eine Anzahl xx an Nachrichten mit der Länge nn Bytes sendet, announced, so ergibt das eine Bandbreite bbb von

$$(nn + 42) * 8 * xx / 125\mu s = bbb \ bit/s$$

(42 Bytes ist Overhead für Header, ...). Das CMI (in diesem Beispiel 125$\mu$s) definiert also das Intervall zur Berechnung des Bandbreitenbedarfs eines Streams.

Eine direkte Schlussfolgerung dieses Setups ist allerdings, dass maximal dreizehn Ethernet Nachrichten (in Ethernet auch "Frame" genannt) mit minimaler Länge der SR Class A pro Port verwendet werden können, da ansonsten die 75% Grenze für die maximale Bandbreite überschritten werden würde. (Ein minimaler Ethernet Frame hat die Länge 6.72$\mu$s bei 84 Byte; bei 75% Bandbreite ergibt sich bei einer CMI von 125$\mu$s ein Wert von 93.75$\mu$s, der zur Verfügung steht. 93.75$\mu$s/6.72$\mu$s ergibt maximal 13 minimale Ethernet Frames bei einer Bandbreite von 100Mbit/sec.)

Es ist eine Aufgabe der Erfindung, ein Verfahren anzugeben, mit welchem in einem verteilten Computernetzwerk, das beispielsweise den IEEE 802.1Q-2011 (oder einen zukünftigen IEEE 802.1Q Standard) implementiert oder auf ähnlichen Vorgaben wie in diesem Standard spezifiziert basiert, die Anzahl der in einer betrachteten Zeiteinheit versendeten Echtzeitnachrichten erhöht werden kann. Insbesondere ist es eine Aufgabe der Erfindung, obiges Ziel zu erreichen, ohne die Latenz von nicht zeitgesteuerten Echtzeitnachrichten, etwa AVB-Nachrichten nicht zu erhöhen.

Diese Aufgabe wird mit einem eingangs erwähnten Verfahren dadurch gelöst, dass erfindungsgemäß weiters von Rechenknoten zeitgesteuerte Nachrichten versendet werden, wobei entsprechend einem definierten Schedule die zeitgesteuerten Nachrichten von den Rechenknoten periodisch versendet werden, wobei die Periodendauer der zeitgesteuerten Nachrichten eine Funktion der Zeitdauer der CM-Zeitintervalle ist, wobei die Sendezeitpunkte von zeitgesteuerten Nachrichten, welche von unterschiedlichen Rechenknoten an dieselbe aktive Komponenten gesendet werden, zueinander zeitlich phasenverschoben sind, derart, dass die zeitgesteuerten Nachrichten von unterschiedlichen Rechenknoten zu unterschiedlichen Zeitpunkten, d.h. in einander nicht überschneidenden Zeitintervallen in der aktiven Komponente empfangen werden, und wobei die Summe der von zeitgesteuerten Nachrichten und von Echtzeit-Nachrichten belegten Bandbreiten innerhalb eines CM-Zeitintervalls den Wert für die Echtzeit-Bandbreite nicht überschreitet.

Diese Aufgabe wird außerdem mit einem eingangs erwähnten Computernetzwerk dadurch gelöst, dass erfindungsgemäß zumindest zwei Rechenknoten vorgesehen sind, welche dazu eingerichtet sind, zeitgesteuerte Nachrichten zu versenden, wobei entsprechend einem definierten Schedule die zeitgesteuerten Nachrichten von den zumindest zwei Rechenknoten periodisch versendet werden, wobei die Periodendauer der zeitgesteuerten Nachrichten eine Funktion der Zeitdauer der CM-Zeitintervalle ist, wobei die Sendezeitpunkte von zeitgesteuerten Nachrichten, welche von unterschiedlichen Rechenknoten an dieselbe aktive Komponenten gesendet werden, zueinander zeitlich phasenverschoben sind, derart, dass die zeitgesteuerten Nachrichten von unterschiedlichen Rechenknoten zu unterschiedlichen Zeitpunkten, d.h. in einander nicht überschneidenden Zeitintervallen in der aktiven Komponente empfangen werden, und wobei die Summe der von zeitgesteuerten Nachrichten und von Echtzeit-Nachrichten belegten Bandbreiten innerhalb eines CM-Zeitintervalls den Wert für die Echtzeit-Bandbreite nicht überschreitet.

Die prinzipiell zur Verfügung stehende, maximale Übertragungsrate, mit welcher über die Kommunikationsleitungen kommuniziert werden kann, wird als "port transmit rate" bezeichnet. Beispielsweise beträgt die "port transmit rate" in Ethernet 10Mbit/sec, 100Mbit/sec, 1Gbit/sec oder auch höher.

Die Echtzeit-Bandbreite gibt den Wert (z.B. in %) an, der von dieser "port transmit rate" für Echtzeit-Nachrichten zur Verfügung steht.

Bei der vorliegenden Erfindung ist vorgesehen, dass die Summe der Bandbreiten der zeitgesteuerten Nachrichten und der nicht-zeitgesteuerten Echtzeit-Nachrichten kleiner oder gleich der vorgegebenen Echtzeit-Bandbreite, die ursprünglich für die nicht-zeitgesteuerten Echtzeit-Nachrichten zur Verfügung steht, ist. Die zeitgesteuerten Nachrichten und die nicht-zeitgesteuerten Echtzeit-Nachrichten teilen sich somit den ansonsten für nicht-zeitgesteuerte Echtzeit-Nachrichten zur Verfügung stehenden Anteil an der "port transmit rate".

Bei der vorliegenden Erfindung wird somit unterschieden zwischen "herkömmlichen" Echtzeit-Nachrichten, z.B. AVB-Nachrichten, die nicht zeitgesteuerte kommuniziert werden, und den neu eingeführten, zeitgesteuerten Nachrichten bzw. zeitgesteuerten Echtzeit-Nachrichten.

Das vorgestellte Verfahren ermöglicht, es eine skalierbare höhere Anzahl von Echtzeitnachrichten einem Port einer aktiven Komponente, z.B. dem Port einer Bridge, zuzuweisen.

Dies wird dadurch erreicht, dass für einen Teil der in dem Computernetzwerk gesendeten Nachrichten zeitgesteuerte Kommunikation implementiert wird, wobei spezielle Vorgaben an den Schedule für die Zeitsteuerung gestellt werden und auch die Bandbreitenvorgaben, welche für die nicht zeitgesteuerten Echtzeitnachrichten, z.B. für AVB-Nachrichten vorgesehen sind, eingehalten werden müssen. Dadurch wirken die zeitgesteuerten Nachrichten wie AVB Nachrichten. Mit der Erfindung kann somit ein Standard Ethernet Computernetzwerk zum Zwecke der besseren Bandbreitenausnutzung erweitert und neuartig konfiguriert werden.

Mit der vorliegenden Erfindung kann die zeitliche Performanz z.B. in einem auf IEEE 802.1Q-2011 basierten Computernetzwerk verbessert werden kann. Konkret wird ein Verfahren vorgestellt, mit dem Nachrichten synchronisiert verschickt werden, sodass Bandbreite, die z.B. laut IEEE 802.1Q-2011 Standard exakt einem Netzwerkteilnehmer zugewiesen ist, durch das Verfahren von mehreren Netzwerkteilnehmern koordiniert geteilt werden kann. Das Verfahren ermöglicht es, für eine höhere Anzahl von Nachrichten Latenz-Eigenschaften zu garantieren, als es in einem rein auf IEEE 802.1Q-2011 basierenden Computersystem möglich ist.

Die vorliegende Erfindung legt somit ein innovatives Verfahren offen, wie in einem verteilten Computernetzwerk, das z.B. den IEEE 802.1Q-2011 (oder einen zukünftigen IEEE 802.1Q Standard) implementiert, die Anzahl der Echtzeitnachrichten erhöht werden kann. Das Verfahren sieht vor, dass zeitgesteuerte Kommunikation implementiert wird und ein Teil der Echtzeitnachrichten, die im IEEE 802.1Q-2011 Standard beschrieben werden, zum Beispiel ein Teil der SR Class A Nachrichten, zeitgesteuert kommuniziert wird. Das Verfahren legt darüber hinaus offen, wie die Schedules der zeitgesteuerten Nachrichten auszusehen haben, damit die Latenzeigenschaften von jenen Echtzeitnachrichten, die nicht zeitgesteuert verschickt werden, durch die Zeitsteuerung nicht verschlechtert werden. Die Zeitsteuerung wird dabei erfindungsgemäß in den Endsystemen, also in den Computern und nicht in der Bridge implementiert.

Von Vorteil ist es, wenn die zeitgesteuerten Nachrichten von zumindest zwei der Rechenknoten versendet werden.

Ebenso hat es sich für einen optimalen Ablauf der Kommunikation als günstig herausgestellt, wenn die Periodendauer der zeitgesteuerten Nachrichten ein ganzzahliges Vielfaches eines CM-Zeitintervalles ist.

Es kann auch vorgesehen sein, die Periodendauer der zeitgesteuerten Nachrichten der Dauer eines CM-Zeitintervalls geteilt durch eine ganze Zahl entspricht.

Bei einer Variante der Erfindung ist vorgesehen, dass alle zeitgesteuerten Nachrichten mit derselben Periodendauer versendet werden.

Bei einer anderen Ausführungsform der Erfindung ist vorgesehen, dass zumindest von zwei Knotenrechnern zeitgesteuerte Nachrichten mit unterschiedlicher Periodendauer versendet werden.

Zweckmäßig ist es, wenn die Sendezeitpunkte von zeitgesteuerten Nachrichten mit gleicher Periodendauer derart gewählt sind, dass die Sendezeitpunkte von zeitgesteuerten Nachrichten mit gleicher Periodendauer derart gewählt sind, dass die Sendezeitpunkte von zwei aufeinanderfolgenden zeitgesteuerten Nachrichten von unterschiedlichen Knotenrechnern exakt oder mindestens eine Zeitspanne auseinander liegen, welche Zeitspanne der Periodendauer dividiert durch die Anzahl der Knotenrechner entspricht.

So sind beispielsweise bei zwei Knotenrechnern, die zeitgesteuerte Nachrichten versenden, zwei aufeinander folgende Nachrichten von unterschiedlichen Knotenrechnern um die halbe Periodendauer zueinander zeitlich versetzt. Beträgt die Periodendauer zweimal die Länge des CM-Zeitintervalls, so liegen die beiden Nachrichten (d.h. deren Sendezeitpunkte) genau ein CM-Zeitintervall auseinander.

Vorteilhaft ist es, wenn bei einem Schedule, welcher das Senden von zwei oder mehr zeitgesteuerten Nachrichten unterschiedlicher Knotenrechner innerhalb eines CM-Zeitintervalls vorsieht, der Schedule weiters vorsieht, dass der Sendezeitpunkt der n-ten zeitgesteuerten Nachricht frühestens nach Ablauf des Sendezeitpunktes der (n-1)-ten Nachricht plus der Sendedauer der (n-1)-ten Nachricht, mit n = 2, 3, 4, .... liegt.

Außerdem kann vorgesehen sein, dass zwei oder mehr voneinander unterschiedliche Klassen von Echtzeit-Nachrichten in dem Netzwerk gesendet werden, welche unterschiedlichen Klassen sich zumindest durch das den Nachrichten der jeweiligen Klasse zugeordnete CM-Zeitintervall unterscheiden.

Bei der Erfindung kann dann vorgesehen sein, Echtzeit-Nachrichten einer bestimmten Klasse, welche als zeitgesteuerte Nachrichten gesendet werden, mit einer Periodendauer gesendet werden, welche eine Funktion des CM-Zeitintervalls dieser Echtzeit-Nachrichten ist.

Häufig bzw. in der Regel unterscheiden sich Nachrichten aus unterschiedlichen Klassen auch durch unterschiedliche Prioritäten. Es kann dann auch noch vorgesehen sein, dass die zeitgesteuerten Nachrichten dieselbe oder eine höhere Priorität zugeordnet bekommen als die korrespondierenden Echtzeit-Nachrichten (d.h., wird eine Echtzeit-Nachricht als zeitgesteuerte Nachricht versendet, bekommt die zeitgesteuerte Echtzeit-Nachricht dieselbe oder eine höhere Priorität zugeordnet, wie sie sie als nicht zeitgesteuerte Nachricht gehabt hätte).

Konkret ist bei der Erfindung vorgesehen, dass zumindest ein Teil der Echtzeit-Nachrichten als zeitgesteuerte Nachrichten versendet werden. Insbesondere bedeutet dies, dass von jenen Echtzeit-Nachrichten, die üblicherweise nicht zeitgesteuert gesendet werden, zumindest ein Teil als zeitgesteuerte (Echtzeit-)Nachricht gesendet wird. Andere in dem Netzwerk kommunizierte Nachrichten, bei denen es sich nicht um Echtzeit-Nachrichten handelt, also insbesondere Standard-Ethernet-Nachrichten, werden hingegen in der Regel nicht zeitgesteuert kommuniziert, auch nicht im Rahmen der vorliegenden Erfindung.

Weiters kann vorgesehen sein, dass zumindest ein Teil der Echtzeit-Nachrichten einer bestimmten Klasse zeitgesteuert versendet wird.

Werden beispielsweise Echtzeitnachrichten der AVB-Klasse "SR Class A" zeitgesteuert verschickt, so beträgt die Dauer für das CM-Zeitintervall CMI 125 Mikrosekunden; AVB-Nachrichten der Klasse "SR Class A", welche zeitgesteuert versendet werden ("TT-SR Class A Nachrichten", also "time-triggered SR Class A Nachrichten"), werden entsprechend mit einer Periodendauer, welche eine Funktion dieses Wertes ist, z.B. ein ganzzahliges Vielfaches, also z.B. das 1-, 2-, 3-, usw. fache von 125 Mikrosekunden, oder 125 Mikrosekunden, geteilt durch eine ganze Zahl ist, versendet.

Werden z.B. (zusätzlich oder alternativ) Nachrichten der AVB-Klasse "SR Class B" zeitgesteuert versendet ("TT SR Class B"-Nachrichten), wird die Periodendauer auf Basis des entsprechende CMI-Zeitintervalls für SR Class B Nachrichten, welche 250 Mikrosekunden beträgt, berechnet.

Besonders einfach lässt sich das Versenden der Nachrichten planen, wenn vorgesehen ist, dass zeitgesteuerte Nachrichten am Beginn eines CM-Zeitintervalls gesendet werden.

Schließlich ist vorteilhafterweise auch noch vorgesehen, dass die für Echtzeitnachrichten zur Verfügung stehende Bandbreite beliebig zwischen zeitgesteuerten und nicht-zeitgesteuerte Echtzeitnachrichten aufteilbar ist.

Wie oben schon erwähnt, kann außerdem vorgesehen sein, dass die zeitgesteuerten Nachrichten zumindest die Priorität der (nicht zeitgesteuerten) Echtzeitnachrichten oder eine höhere Priorität aufweisen.

Beispielsweise verfügen AVB Nachrichten der SR Class A/SR Class B, die als zeitgesteuerte Nachrichten gesendet werden, über dieselbe oder eine höhere Priorität wie SR Class A/SR Class B Nachrichten; es kann aber auch vorgesehen sein, dass allen zeitgesteuerten Nachrichten eine höhere Priorität als den nicht zeitgesteuerten (AVB-)Echtzeitnachrichten zugeordnet wird.

Schließlich ist mit Vorteil noch vorgesehen, dass zeitgesteuerte Nachrichten, die von demselben Knotenrechner versendet werden, gleiche Identifikationsmerkmale, beispielsweise die gleiche StreamID enthalten.

Die Länge eines CM-Zeitintervalls beträgt typischerweise 125 Mikrosekunden und/oder 250 Mikrosekunden.

Außerdem ist in der Regel vorgesehen, dass die definierte Echtzeit-Bandbreite auf maximal 75% der für Echtzeit-Nachrichten innerhalb eines CM-Zeitintervalle zur Verfügung stehende Bandbreite begrenzt ist.

Im Folgenden ist die Erfindung an Hand der Zeichnung an Hand einer beispielhaften Realisierung näher erörtert. Es zeigt

Fig. 1 ein Computernetzwerk bestehend aus drei Rechenknoten, beispielsweise Computern und einer Bridge, wobei die Bridge den IEEE 802.1Q Standard implementiert,

Fig. 2 ein Datenflussdiagramm, in welchem zwei Nachrichten in etwa zum gleichen Zeitpunkt von einer Bridge empfangen werden, und wobei die Bridge die Nachrichten speichert und sie nacheinander weiter sendet,

Fig. 3 ein Computernetzwerk bestehend aus vier Rechenknoten und einer Bridge, wobei die Bridge den IEEE 802.1Q Standard implementiert, und wobei zwei der drei Rechenknoten zeitgesteuerte Kommunikation implementieren,

Fig. 4 ein Schedule für zeitgesteuerte Nachrichten, in dem die zeitgesteuerten Nachrichten von zwei Rechenknoten derart geplant sind, dass sie mit einer Periode verschickt werden, die der doppelten Zeitdauer des Class Measurement Intervalls (CMI) entspricht,

Fig. 5 ein Datenflussdiagramm, in welchem jeweils eine zeitgesteuerte Nachricht und eine nicht-zeitgesteuerte Nachricht in etwa zur gleichen Zeit von einer Bridge empfangen werden,

Fig.6 ein Datenflussdiagramm, in dem drei unterschiedliche Nachrichten nicht-zeitgesteuert gesendet werden,

Fig. 7 ein Schedule für zeitgesteuerte Nachrichten, wobei zeitgesteuerte Nachrichten von zwei Rechenknoten mit unterschiedlichen Perioden versendet werden,

Fig.8 ein Datenflussdiagramm, in dem drei zeitgesteuerte Nachrichten und eine nicht-zeitgesteuerte Nachricht kommuniziert werden,

Fig. 9 ein Datenflussdiagramm, in dem vier Nachrichten nicht zeitgesteuert kommuniziert werden,

Fig. 10 schematisch eine Darstellung der Bandbreitenaufteilung zwischen zeitgesteuerten und nicht zeitgesteuerten Echtzeitnachrichten, und

Fig. 11 schematisch die interne Funktionsweise einer Bridge.

Das folgende konkrete Beispiel behandelt eine der vielen möglichen Realisierungen des neuen Verfahrens.

In Figur 1 ist ein aus dem Stand der Technik bekanntes beispielhaftes Computernetzwerk dargestellt, das aus drei Rechenknoten 101, 102, 104 besteht, die über eine aktive Komponente in Form einer Bridge 201 gegenseitig Nachrichten austauschen. Dazu sind die Rechenknoten 101, 102, 104 mit Kommunikationsleitungen, vorzugsweise mit bi-direktionalen Kommunikationsleitungen 301, 302, 304 wie dargestellt mit der Bridge 201 verbunden. Die Bridge 201 implementiert den IEEE 802.1Q-2011 Standard, d.h. diese Bridge entspricht dem bzw. arbeitet nach dem genannten Standard. Alle Nachrichten, die ausgetauscht werden, sind Ethernet Nachrichten.

Eine aktive Komponente verfügt über "Wissen des Netzwerkes" und Speichermethoden. Sie weiß, wohin eine Nachricht weitergesendet werden muss. Eine passive Komponente wäre z.B. ein Hub, der weder Nachrichten speichert noch diese korrekt adressiert - ein solcher Hub wird einlangende Nachrichten lediglich "broadcasten". Bei einer solchen aktiven Komponenten handelt sich typischerweise um eine sogenannte "Bridge", oder um einen Switch oder auch beispielsweise einen Router mit entsprechender Funktionalität.

In Figur 2 ist ein Kommunikationsverfahren für das Computernetzwerk aus Figur 1 dargestellt. Dabei wird davon ausgegangen, dass das Computernetzwerk keine zeitgesteuerte Kommunikation implementiert. In diesem Fall ist es möglich, dass ein Rechenknoten 101 und ein weiterer Rechenknoten 102 zu in etwa dem gleichen Zeitpunkt Nachrichten 401, 402 verschicken, wobei beide Nachrichten 401, 402 an einen dritten Rechenknoten 104 adressiert sind. Da dieser dritte Rechenknoten 104 nur über eine Kommunikationsleitung 304 mit der Bridge 201 verbunden ist, müssen nun die Nachrichten 401, 402 zeitlich nacheinander über diese Kommunikationsleitung 304 von der Bridge 201 an den Rechenknoten 104 geschickt werden. In dem Beispiel aus Figur 2 wird zuerst die Nachricht 401 und erst danach die Nachricht 402 verschickt. Daraus resultiert, dass die Nachricht 401 eine Latenz 501 und die Nachricht 402 eine Latenz 502 aufweist, wobei die Latenz (gemessen in Zeiteinheiten) ab dem Zeitpunkt 601 des Starts des Empfangs einer Nachricht in der Bridge 201 bis zur vollständigen Weiterleitung der Nachricht durch die Bridge 201 gemessen wird. Der IEEE 802.1Q-2011 Standard sichert zu, dass für Echtzeitnachrichten die Anzahl der Nachrichten, die sich beim Empfang in der Bridge 201 überlappen können, beschränkt ist, daher kann die Übertragungslatenz von Echtzeitnachrichten bereits in einem IEEE 802.1Q-2011 Computernetzwerk bestimmt werden. Der Nachteil dieser Lösung ist jedoch die beschränkte Anzahl von Echtzeitnachrichten, die verschickt werden können.

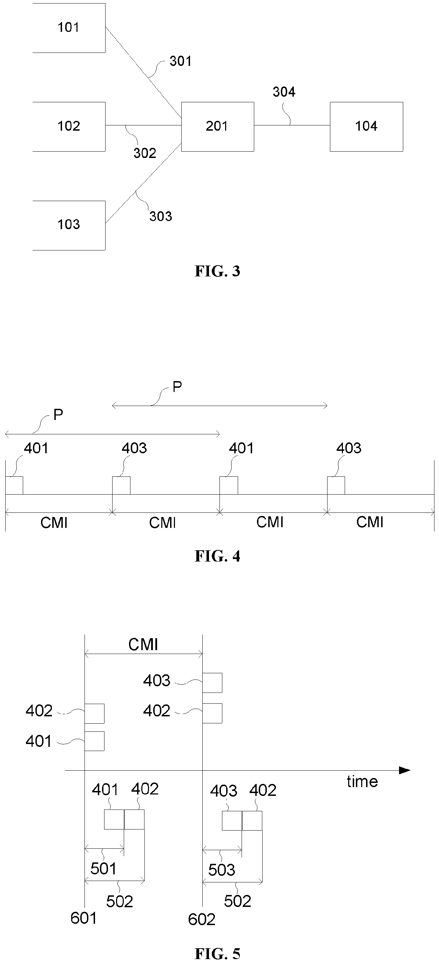

In Figur 3 ist ein erfindungsgemäß erweitertes Computernetzwerk dargestellt. Es besteht aus vier Rechenknoten 101, 102, 103, 104, die über Kommunikationsleitungen 301, 302, 303, 304 mit der Bridge 201 verbunden sind. In diesem Computernetzwerk implementieren die beiden Rechenknoten 101, 103 eine zeitgesteuerte Kommunikation, versenden also zeitgesteuerte Nachrichten.

In Figur 4 ist ein Schedule für die Rechenknoten 101, 103 des in Figur 3 dargestellten Computernetzwerkes abgebildet. Die Zeitachse ist gemäß Figur 4 in Zeitabschnitte unterteilt, von denen jeder Zeitabschnitt eine Länge aufweist, welcher der Länge des CM-Zeitintervalls CMI, im Folgenden auch Class Measurement Intervall CMI genannt, entspricht, sodass also in dem gewählten Beispiel vier Intervalle mit je 125μs Zeitdauer dargestellt sind. Das Schedule beschreibt nun, dass die Rechenknoten Nachrichten periodisch mit einer Periode P, welche hier zweimal der Länge des Class Measurement Intervalls CMI entspricht, senden. Der Begriff Class Measurement Intervall CMI ist dabei im IEEE 802.1Q-2011 Standard definiert, zum Beispiel wird im Falle der SR Class A das CMI auf 125 Mikrosekunden gesetzt. Weiters sieht das Schedule vor, dass die Rechenknoten 101, 103 ihre Nachrichten 401, 403 jeweils zeitversetzt, also phasenverschoben um die Länge eines Class Measurement Intervall CMI senden.

Grundsätzlich können die zeitgesteuerten, periodischen Nachrichten 401, 403 innerhalb eines CM-Zeitintervalls CMI an beliebiger Stelle eines solchen Zeitintervalls gesendet werden (wobei unterschiedliche Nachrichten 401 eines Knotens 101 und unterschiedliche Nachrichten 403 eines Knotens 103 immer an derselben Stelle innerhalb unterschiedlicher Zeitfenster CMI auftreten), vorzugsweise werden die Nachrichten 401, 403 wie dargestellt am Anfang eines CMI gesendet. Dies stellt eine besonders einfache und zuverlässige Implementierung der Erfindung dar.

Die nicht zeitgesteuerten Echtzeitnachrichten 402, z.B. AVB-Nachrichten, die in dem Schedule in Figur 4 nicht dargestellt sind, werden asynchron "rund um die zeitgesteuerten Nachrichten in einem CM-Zeitintervall herum" gesendet. Wichtig ist dabei die Bandbreitenbegrenzung, da erfindungsgemäß die Summe der Bandbreiten für die zeitgesteuerten Nachrichten und die nicht zeitgesteuerten Echtzeitnachrichten die maximal zur Verfügung stehende, definierte Echtzeit-Bandbreite für Echtzeitnachrichten nicht überschreiten darf.

Für nicht zeitgesteuerte Echtzeitnachrichten vom Typ SR Class A stehen beispielsweise 75% der verfügbaren Bandbreite zur Verfügung, d.h. in einem CM-Zeitintervall CMI darf grundsätzlich nur 75% der zur Verfügung stehenden Bandbreite bzw. der zur Verfügung stehenden Zeit, das sind für SR Class A Nachrichten dann 75% von 125 Mikrosekunden, verwendet werden. Werden nun erfindungsgemäß zusätzlich zeitgesteuerte (Echtzeit-)Nachrichten eingeführt, so teilen sich die nicht zeitgesteuerten und die zeitgesteuerten Nachrichten diese 75% der zur Verfügung stehenden Bandbreite, wobei das Verhältnis, wie diese beschränkte Bandbreite zwischen zeitgesteuerten und nicht zeitgesteuerten Nachrichten aufgeteilt wird, grundsätzlich beliebig erfolgen kann.

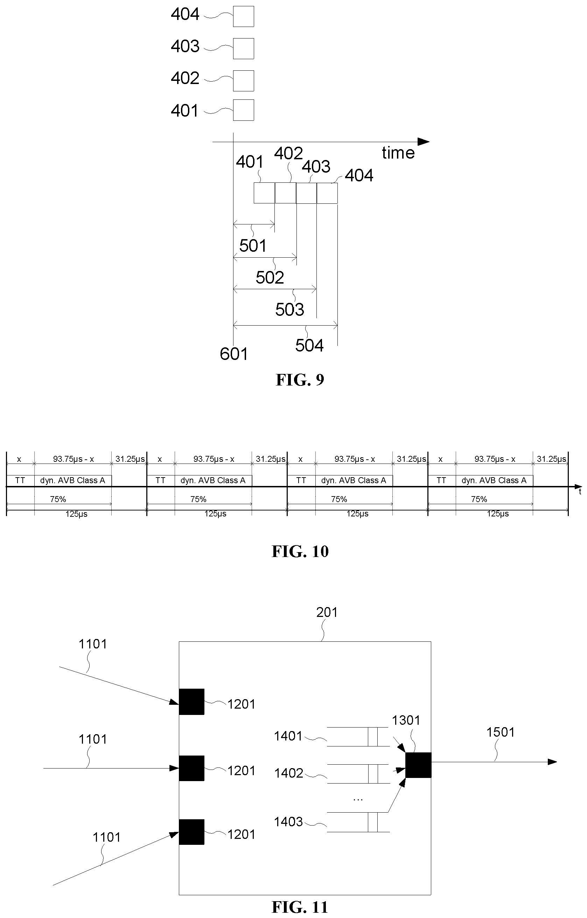

Die "verbleibende" Zeitspanne innerhalb einer CM-Zeitspanne CMI, nachdem z.B. die Nachricht 401 gesendet wurde, kann bis zu 75% mit AVB Nachrichten, also mit Echtzeitnachrichten aufgefüllt werden, die verbleibenden 25% sind z.B. Standard-Ethernet-Nachrichten (best-effort traffic). Eine schematische Übersicht dazu ist in Figur 10 dargestellt.

In Figur 5 wird das Kommunikationsverhalten des in Figur 3 dargestellten und laut dem Schedule in Figur 4 konfigurierten Computernetzwerkes dargestellt. Der linke Teil des Datenflussdiagramms entspricht dabei exakt dem Datenflussdiagramm aus Figur 2. Da der Rechenknoten 102 nicht zeitgesteuert kommuniziert, ist ein mögliches Szenario, wie im linken Teil von Figur 5 dargestellt, dass eine Nachricht 402 des Rechenknotens 102 zum in etwa gleichen Zeitpunkt 601 mit einer Nachricht 401 des zeitgesteuert kommunizierenden Rechenknotens 101 bei der aktiven Komponente in Form einer Bridge 201 eintrifft. Bei der Nachricht 401 handelt es sich beispielsweise um die in Figur 4 ganz links dargestellte Nachricht 401.

Die Bridge 201 schickt dementsprechend die Nachrichten 401, 402 nacheinander über den Kommunikationskanal (Kommunikationsleitung) 304 zum Rechenknoten 104.

Die Nachricht 401 weist eine Latenz 501 und die Nachricht 402 eine Latenz 502 auf.

Die Bridge 201 kann dabei entweder zufällig wählen, in welcher Reihenfolge die beiden Nachrichten 401, 402 gesendet werden, oder die Bridge 201 verfügt über einen eigenen Schedule, in welchem geregelt ist, in welcher Reihenfolge in etwa gleichzeitig einlangende Nachrichten zu versenden sind.

Weiters zeigt Figur 5 im rechten Teil einen Zeitpunkt 602, welcher eine Zeitspanne CMI nach dem Zeitpunkt 601 liegt. Hier ist nun der Vorteil der Erfindung und des erfindungsgemäßen Verfahrens gegenüber dem reinen IEEE 802.1Q-2011 Standard erkennbar. In diesem rechten Teil empfängt die Bridge 201 in etwa zum gleichen Zeitpunkt 602 Nachrichten 402 (nicht zeitgesteuert) und 403 (zeitgesteuert) von den beiden Rechenknoten 102, 103. Es ist jedoch ausgeschlossen, dass auch eine Nachricht 401 des Rechenknotens 101 in etwa zum gleichen Zeitpunkt empfangen wird, da das Schedule der zeitgesteuerten Kommunikation eine Nachricht 401 des Rechenknoten 101 erst wieder im nächsten CMI vorsieht, wie in Figur 4 dargestellt. Da somit nur die Nachricht 401 oder die Nachricht 403, nicht aber beide Nachrichten 401, 403 gleichzeitig mit der Nachricht 402 kollidieren können, ergibt sich durch die zusätzliche Nachricht 403 gegenüber dem Kommunikationsszenario in Figur 2 dargestellt für die Nachricht 402 keine zusätzliche Latenz, denn, wie dem rechten Teil von Figur 5 zu entnehmen ist, weist die Nachricht 403 eine Latenz 503 und die Nachricht 402 eine Latenz 502 auf (unter der Annahme, dass die Nachricht 401 und die Nachricht 403 dieselbe Länge aufweisen). Figur 5 zeigt also beispielhaft, dass erfindungsgemäß z.B. bei drei Nachrichten 401, 402, 403 an Stelle von nur zwei Nachrichten gemäß Figur 2 die Latenz der nicht-zeitgesteuerten Nachricht 402 sich nicht verschlechtert. Figur 5 zeigt also, wie durch zeitgesteuerte Kommunikation mehr Echtzeitnachrichten verschickt werden können, ohne die bestehenden Latenzeigenschaften von Echtzeitnachrichten zu verschlechtern.

Die aktive Komponente in Form einer Bridge speichert die Nachrichten und sendet sie nacheinander weiter. Erfindungsgemäß ist es aufgrund des Schedules der zeitgesteuerten Nachrichten ausgeschlossen, dass zeitgesteuerte Nachrichten gleichzeitig, zu in etwa gleichen oder überlappenden Zeitfenstern von der Bridge empfangen werden. Außerdem ergibt sich durch die Erfindung, dass bei der in Figur 5 beispielhaft gezeigten Situation die nicht-zeitgesteuerten Nachrichten nur jeweils von einer zeitgesteuerten Nachricht verzögert werden können, eine Verzögerung einer nicht-zeitgesteuerten Nachricht durch zwei oder mehrere zeitgesteuerte Nachrichten ist auf Grund der Erfindung bei der in Figur 5 gezeigten Situation nicht möglich.

Generell lässt sich festhalten, dass die nicht-zeitgesteuerten Nachrichten nur jeweils von einer maximalen Anzahl von zeitgesteuerten Nachricht verzögert werden, wobei sich diese maximale Anzahl aus dem Schedule ergibt. Werden zum Beispiel eine Anzahl N zeitgesteuerter Nachrichten unmittelbar hintereinander gescheduled, dann bedeutet dies, dass die Bridge unmittelbar hintereinander diese N zeitgesteuerten Echtzeitnachrichten empfängt. Wenn im Schedule vorgesehen ist, dass anschließend ausreichend lange keine zeitgesteuerten Echtzeitnachrichten gescheduled sind, so können die nicht zeitgesteuerten Echtzeitnachrichten abgearbeitet werden. Die Verzögerung der nicht zeitgesteuerten Echtzeitnachrichten durch zeitgesteuerte Nachrichten ist also berechenbar aufgrund des Schedules der zeitgesteuerten Echtzeitnachrichten.

Unter dem Begriff "gleichzeitig" oder "zu in etwa gleichen Zeiten" ist zu verstehen, dass zwei Nachrichten "gleichzeitig" "oder zu in etwa gleichen Zeiten" empfangen werden, wenn sich die Zeitpunkte ihres Weiterleitens von der Bridge gegenseitig beeinflussen können, d.h., wenn die Weiterleitung einer Nachricht durch die andere Nachricht verzögert werden kann. In diesem Fall spricht man von einem "gleichzeitigen", "in etwa gleichzeitigen" oder "zu in etwa gleichzeitigen" Senden von Nachrichten an eine Bridge (aktive Komponente).

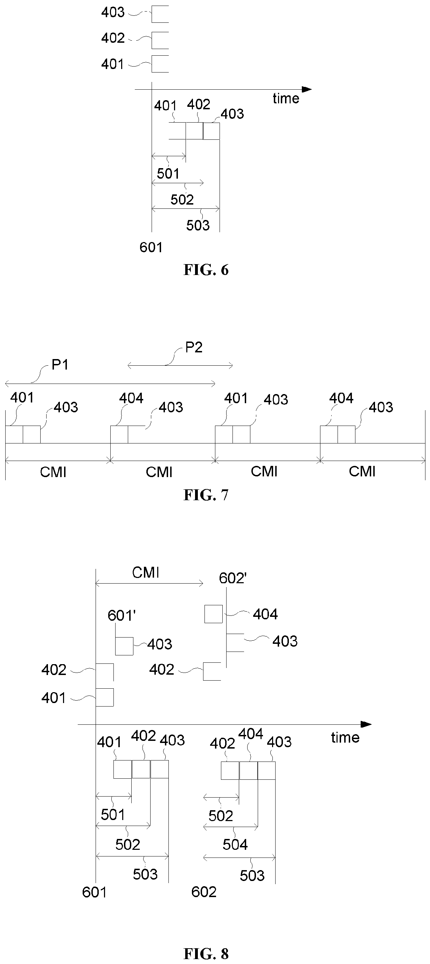

Zum besseren Verständnis der Erfindung zeigt Figur 6 ein Datenflussdiagramm, in dem ebenfalls drei unterschiedliche Nachrichten 401, 402, 403 gesendet werden. Im Gegensatz zu der Darstellung nach Figur 5 sind in gemäß Figur 6 allerdings alle drei Nachrichten 401, 402, 403 nicht-zeitgesteuert. Wie Figur 6 zeigt, ist es daher möglich, dass alle drei Nachrichten 401, 402, 403 zu in etwa gleichen Zeiten oder überlappenden Zeitfenstern 601 von der Bridge empfangen werden. Wie in Figur 6 gezeigt, wird daher im schlechtesten Fall eine Nachricht 403 von zwei Nachrichten 401, 402 bzw. um die Zeitdauer der "Länge" der beiden Nachrichten 401, 402 verzögert.

Figur 6 zeigt hier nur ein beispielhaftes Szenario. Da die Nachrichten nicht-zeitgesteuert und nicht mit Prioritäten versehen sind, ist die Reihenfolge des Sendens der Nachrichten von der Bridge nicht deterministisch. Daher muss für die Latenz im schlechtesten Fall davon ausgegangen werden, dass eine beliebige der drei Nachrichten 401, 402, 403 um zwei Nachrichten verzögert wird.

Figur 7 zeigt ein weiteres erfindungsgemäßes Schedule für zeitgesteuerte Nachrichten 401, 403, in dem die zeitgesteuerten Nachrichten 401, 403 von zwei Rechenknoten derart geplant sind, dass die Nachrichten 403 eines Rechenknoten mit der Periode P2 des CM-Zeitintervalls (Class Measurement Intervalls) CMI verschickt werden und die Nachrichten 401 des anderen Rechenknotens mit einer Periode P1, die dem doppelten der Zeitdauer des Class Measurement Intervalls CMI entspricht, verschickt werden.

Der Schedule sieht dabei weiters vor, dass die unterschiedlichen zeitgesteuerten Nachrichten 401, 403 derart zeitlich geplant sind, dass bei einem Auftreten der unterschiedlichen zeitgesteuerten Nachrichten 401, 403 innerhalb eines Class Measurement Intervalls CMI diese zeitgesteuerten Nachrichten 401, 403 sich nicht überschneiden, d.h. nicht gleichzeitig auftreten. Dazu ist beispielsweise vorgesehen, dass die Periode für die zeitgesteuerte Nachricht 403 genau oder frühestens nach Ablauf der Zeitdauer einer zeitgesteuerten Nachricht 401 beginnt.

Vorzugsweise ist weiters vorgesehen, dass beide Nachrichten 401, 403 nacheinander am Anfang des Class Measurement Intervalls CMI auftreten.

Figur 8 zeigt ein Datenflussdiagramm, in welchem ein Schedule aus Figur 7 implementiert ist. Gemäß Figur 8 werden drei zeitgesteuerte Nachrichten 401, 403, 404 und eine nicht-zeitgesteuerte Nachricht 402 kommuniziert. Die zeitgesteuerte Nachricht 403 hat eine Periode, welche der Zeitdauer des Class Measurement Intervalls CMI entspricht, die zweite und dritte zeitgesteuerte Nachricht 401, 404 haben eine Periode, die jeweils dem doppelten eines CMI entspricht. Nachricht 401 und Nachricht 404 werden zueinander außerdem um die halben Periodenlänge, also um die Länge des Class Measurement Intervalls CMI zueinander versetzt gesendet.

Für die nicht-zeitgesteuerte Nachricht 402 wird angenommen, dass sie mit der Periode des Class Measurement Intervalls CMI verschickt wird. Wie in Figur 8 links dargestellt empfängt die Bridge in etwa zur gleichen Zeit 601 die nicht-zeitgesteuerte Nachricht 402 und die zeitgesteuerte Nachricht 401, gefolgt von der zeitgesteuerten Nachricht 403 zu einem Zeitpunkt 601', wie im Schedule in Figur 7 vorgesehen. Diese drei Nachrichten werden mit den Latenzen 501, 502, 503 für die Nachrichten 401, 402, 403 von der Bridge weiter gesendet. Die gezeigte Reihenfolge der Nachrichten ist dabei rein beispielhaft, es ist aber klar zu erkennen, dass die maximale Latenz einer Nachricht 401, 402, 403 - in dem gezeigten Fall für die Nachricht 403 - zwei Nachrichtenlängen beträgt.

Die rechte Seite von Figur 8 zeigt, dass zu einem späteren Zeitpunkt 602, der um die Länge des Class Measurement Intervalls CMI nach dem Zeitpunkt 601 liegt, die nicht-zeitgesteuerte Nachricht 402 und die zeitgesteuerte Nachricht 404 in etwa zur gleichen Zeit von der Bridge empfangen werden, gefolgt von (zum Zeitpunkt 602') der zeitgesteuerten Nachricht 403, wie im Schedule in Figur 7 vorgesehen. Hier ist die maximale Latenz der Nachrichten 402, 403, 404 - in dem gezeigten Fall für die Nachricht 403 - wiederum zwei Nachrichtenlängen beträgt.

Figur 9 zeigt zum Vergleich ein Datenflussdiagramm, in dem ebenfalls vier Nachrichten 401, 402, 403, 404 kommuniziert werden, allerdings sind alle vier Nachrichten in bekannter Weise nicht-zeitgesteuert. Im Unterschied zu Figur 8 zeigt Figur 9 (in Analogie zu Figur 6) ein Szenario, in dem alle vier Nachrichten 401, 402, 403, 404 in etwa zur gleichen Zeit von der Bridge empfangen wird. Ein solches Szenario ist denkbar, da die Nachrichten nicht zeitgesteuert sind. Wie dargestellt, beträgt in diesem Fall die maximale Latenz - in dem gezeigten Beispiel für die Nachricht 404 - drei Nachrichten(längen), die maximale Latenz ist somit höher als in Figur 8 dargestellt.

Figur 10 zeigt ein Beispiel für die Aufteilung der 125μs Intervalle in Subintervalle für zeitgesteuerte und ereignisgesteuerte Kommunikation. In diesem Beispiel wird davon ausgegangen, dass insgesamt 75% der Bandbreite der Kommunikationsleitung für AVB Kommunikation verwendet werden kann. Dies entspricht einem Wert von 93,25μs in jedem 125μs Intervall. In jedem dieser 93,25μs Intervalle wird nun ein Intervall der Länge x für zeitgesteuerte Kommunikation und das verbleibende Intervall der Länge 93,25 - x für ereignisgesteuerte Kommunikation verwendet.

Figur 11 zeigt abschließend schematisch noch die interne Funktionsweise einer Bridge 201. Die Bridge 201 empfängt über eingehende Kommunikationsleitungen 1101 Nachrichten an den eingehenden Ports 1201. Die Bridge klassifiziert die eingehenden Nachrichten nach Priorität und weist sie logischen Queues 1401, 1402, 1403 eines oder mehrerer Ports 1301 zu - es sind exemplarisch ein Port 1301 und drei solche Queues 1401, 1402, 1403 dargestellt. Pro Port ist jeder der Queues eine eindeutige Priorität zugeordnet. In Figur 11 ist die Zuteilung der Prioritäten beispielhaft aufsteigend: Queue 1401 (niedrigste Priorität), Queue 1402, Queue 1403 (höchste Priorität). Die Prioritäten werden berücksichtigt bei der Auswahl der nächsten zu sendenden Nachricht über den Port 1301 zum Kommunikationslink 1501.

**Patentansprüche**

1. Verfahren zur Übertragung von Nachrichten in einem Computernetzwerk basierend auf dem IEEE 802.1Q Standard, wobei das Computernetzwerk aus einer Anzahl von Rechenknoten (101, 102, 103, 104) besteht, welche Rechenkoten (101, 102, 103, 104) über ein oder mehrere aktive Komponenten (201) miteinander verbunden sind, wobei jeder Rechenknoten (101, 102, 103, 104) über eine Kommunikationsleitung (301, 302, 303, 304) mit einer aktiven Komponente (201) verbunden ist, und wobei weiters von den Rechenknoten (101, 102, 103, 104) zumindest ein Teil der Nachrichten in Form von Echtzeit-Nachrichten (402) ausgetauscht wird,
   wobei den Echtzeit-Nachrichten (402) definierte CM, Class Measurement, Zeitintervalle (CMI) konstanter Zeitdauer zugeordnet sind, und wobei
   die für Echtzeit-Nachrichten (402) innerhalb eines CM-Zeitintervalle (CMI) zur Verfügung stehende Bandbreite auf eine definierte Echtzeit-Bandbreite begrenzt ist,
   **dadurch gekennzeichnet, dass**
   weiters von Rechenknoten (101, 103) zeitgesteuerte Nachrichten (401, 403; 401, 403, 404) versendet werden, wobei
   entsprechend einem definierten Schedule die zeitgesteuerten Nachrichten (401, 403; 401, 403, 404) von den Rechenknoten (101, 103) periodisch versendet werden,
   wobei die Periodendauer (P; P1, P2) der zeitgesteuerten Nachrichten (401, 403; 401, 403, 404) eine Funktion der Zeitdauer der CM-Zeitintervalle (CMI) ist,
   wobei die Sendezeitpunkte von zeitgesteuerten Nachrichten (401, 403; 401, 403, 404), welche von unterschiedlichen Rechenknoten (101, 103) an dieselbe aktive Komponenten (201) gesendet werden, zueinander zeitlich phasenverschoben sind, derart, dass die zeitgesteuerten Nachrichten (401, 403; 401, 403, 404) von unterschiedlichen Rechenknoten (101, 103) zu unterschiedlichen Zeitpunkten (601, 602; 601, 602, 602'), das heißt in einander nicht überschneidenden Zeitintervallen in der aktiven Komponente (201) empfangen werden,
   und wobei die Summe der von zeitgesteuerten Nachrichten (401, 403; 401, 403, 404) und von Echtzeit-Nachrichten (402) belegten Bandbreiten innerhalb eines CM-Zeitintervalls (CMI) den Wert für die Echtzeit-Bandbreite nicht überschreitet, und wobei zumindest ein Teil der Echtzeit-Nachrichten einer bestimmten Klasse, nämlich der Service Klasse A gemäß IEEE 802.1Q-2011, zeitgesteuerte Nachrichten (401, 403; 401, 403, 404) sind.

2. Verfahren nach Anspruch 1, **dadurch gekennzeichnet, dass** die zeitgesteuerten Nachrichten (401, 403; 401, 403, 404) von zumindest zwei der Rechenknoten (101, 103) versendet werden.

3. Verfahren nach Anspruch 1 oder 2, **dadurch gekennzeichnet, dass** die Periodendauer (P; P1, P2) der zeitgesteuerten Nachrichten (401, 403; 401, 403, 404) ein ganzzahliges Vielfaches eines CM-Zeitintervalles (CMI) ist, oder **dadurch gekennzeichnet, dass** die Periodendauer der zeitgesteuerten Nachrichten der Dauer eines CM-Zeitintervalls (CMI) geteilt durch eine ganze Zahl entspricht.

4. Verfahren nach einem der Ansprüche 1 bis 3, **dadurch gekennzeichnet, dass** alle zeitgesteuerten Nachrichten (401, 403; 401, 403, 404) mit derselben Periodendauer (P) versendet werden, oder **dadurch gekennzeichnet, dass** zumindest von zwei Rechenknoten (101, 103) zeitgesteuerte Nachrichten (401, 403; 401, 403, 404) mit unterschiedlicher Periodendauer (P1, P2) versendet werden.

5. Verfahren nach einem der Ansprüche 1 bis 4, **dadurch gekennzeichnet, dass** die Sendezeitpunkte von zeitgesteuerten Nachrichten (401, 403) mit gleicher Periodendauer (P) derart gewählt sind, dass die Sendezeitpunkte von zwei aufeinanderfolgenden zeitgesteuerten Nachrichten von unterschiedlichen Rechenknoten (101, 103) exakt oder mindestens eine Zeitspanne auseinander liegen, welche Zeitspanne der Periodendauer (P) dividiert durch die Anzahl der Rechenknoten entspricht.

6. Verfahren nach einem der Ansprüche 1 bis 5, **dadurch gekennzeichnet, dass** bei einem Schedule, welcher das Senden von zwei oder mehr zeitgesteuerten Nachrichten unterschiedlicher Rechenknoten (101, 103) innerhalb eines CM-Zeitintervalls (CMI) vorsieht, der Schedule weiters vorsieht, dass der Sendezeitpunkt der n-ten zeitgesteuerten Nachricht frühestens nach Ablauf des Sendezeitpunktes der (n-1)-ten Nachricht plus der Sendedauer der (n-1)-ten Nachricht, mit n = 2, 3, 4, .... liegt.

**7.** Verfahren nach einem der Ansprüche 1 bis 6, **dadurch gekennzeichnet, dass** zwei oder mehr voneinander unterschiedliche Klassen von Echtzeit-Nachrichten in dem Netzwerk gesendet werden, welche unterschiedlichen Klassen sich zumindest durch das den Nachrichten der jeweiligen Klasse zugeordnete CM-Zeitintervall (CMI) unterscheiden, wobei vorzugsweise Echtzeit-Nachrichten einer bestimmten Klasse, welche als zeitgesteuerte Nachrichten gesendet werden, mit einer Periodendauer gesendet werden, welche eine Funktion des CM-Zeitintervalls (CMI) dieser Echtzeit-Nachrichten ist.

**8.** Verfahren nach einem der Ansprüche 1 bis 7, **dadurch gekennzeichnet, dass** zeitgesteuerte Nachrichten (401, 403) am Beginn eines CM-Zeitintervalls (CMI) gesendet werden.

**9.** Verfahren nach einem der Ansprüche 1 bis 8, **dadurch gekennzeichnet, dass** die für Echtzeitnachrichten zur Verfügung stehende Bandbreite beliebig zwischen zeitgesteuerten und nicht-zeitgesteuerte Echtzeitnachrichten aufteilbar ist.

**10.** Verfahren nach einem der Ansprüche 1 bis 9, **dadurch gekennzeichnet, dass** die zeitgesteuerten Nachrichten zumindest die Priorität der Echtzeitnachrichten oder eine höhere Priorität aufweisen.

**11.** Verfahren nach einem der Ansprüche 1 bis 10, **dadurch gekennzeichnet, dass** zeitgesteuerte Nachrichten, die von demselben Rechenknoten versendet werden, gleiche Identifikationsmerkmale, beispielsweise die gleiche StreamID enthalten.

**12.** Verfahren nach einem der Ansprüche 1 bis 11, **dadurch gekennzeichnet, dass** die Länge eines CM-Zeitintervalls 125 Mikrosekunden oder 250 Mikrosekunden beträgt.

**13.** Verfahren nach einem der Ansprüche 1 bis 12, **dadurch gekennzeichnet, dass** die definierte Echtzeit-Bandbreite auf maximal 75% der für Echtzeit-Nachrichten (402) innerhalb eines CM-Zeitintervalle (CMI) zur Verfügung stehende Bandbreite begrenzt ist.

**14.** Computernetzwerk basierend auf dem IEEE 802.1Q Standard zum Durchführen eines Verfahrens nach einem der Ansprüche 1 bis 13 zur Übertragung von Nachrichten.

**Claims**

**1.** A method for transmitting messages in a computer network based on the IEEE 802.1Q standard, wherein the computer network consists of a plurality of computing nodes (101, 102, 103, 104), wherein said computing nodes (101, 102, 103, 104) are interconnected via one or more active components (201), wherein each computing node (101, 102, 103, 104) is connected to an active component (201) via a communication line (301, 302, 303, 304), wherein at least some of the messages are exchanged by the computing nodes (101, 102, 103, 104) in the form of real-time messages (402),
wherein defined CM, class measurement, time intervals (CMI) of constant duration are assigned to the real-time messages (402), and wherein the bandwidth available for real-time messages (402) within a CM time interval (CMI) is limited to a defined real-time bandwidth,
**characterized in that**

furthermore, time-controlled messages (401, 403; 401, 403, 404) are transmitted from computing nodes (101, 103), wherein
the time-controlled messages (401, 403; 401, 403, 404) are periodically transmitted by the computing nodes (101, 103) in accordance with a defined schedule,
wherein the period duration (P; P1, P2) of the time-controlled messages (401, 403; 401, 403, 404) is a function of the duration of the CM time intervals (CMI),
wherein the transmission times of time-controlled messages (401, 403; 401, 403, 404), which are transmitted to the same active component (201) from different computing nodes (101, 103), are phase-shifted to one another such that the time-controlled messages (401, 403; 401, 403, 404) from different computing nodes (101, 103) are received in the active component (201) at different times (601, 602; 601, 602, 602'), that is in non-overlapping intervals,
and wherein the sum of the bandwidths occupied by time-controlled messages (401, 403; 401, 403, 404) and by real-time messages (402) within a CM time interval (CMI) does not exceed the value for the real-time bandwidth,
and wherein at least some of the real-time messages of a certain class, namely the service class A according to IEEE 802.1Q-2011, are time-controlled messages (401, 403; 401, 403, 404).

**2.** The method according to claim 1, **characterized in that** the time-controlled messages (401, 403; 401, 403, 404) are transmitted from at least two of the computing nodes (101, 103).

**3.** The method according to claim 1 or 2, **characterized in that** the period duration (P; P1, P2) of the time-controlled messages (401, 403; 401, 403, 404) is an integral multiple of a CM time interval (CMI) or **char-**

acterized in that the period duration of the time-controlled messages corresponds to the duration of a CM time interval (CMI) divided by an integral number.

4. The method according to one of claims 1 to 3, **characterized in that** all time-controlled messages (401, 403; 401, 403, 404) are transmitted with the same period duration (P) or **characterized in that** time-controlled messages (401, 403; 401, 403, 404) with different period durations (P1, P2) are transmitted by at least two computing nodes (101, 103).

5. The method according to one of claims 1 to 4, **characterized in that** the transmission times of time-controlled messages (401, 403) with identical period duration (P) are chosen in such a way that the transmission times of two successive time-controlled messages from different computing nodes (101, 103) are separated from one another exactly or at least by a time period that corresponds to the period duration (P) divided by the number of computing nodes.

6. The method according to one of claims 1 to 5, **characterized in that** in a schedule, which stipulates the transmission of two or more time-controlled messages from different computing nodes (101, 103) within a CM time interval (CMI), said schedule furthermore stipulates that the transmission time of the n-th time-controlled message occurs at the earliest after expiration of the transmission time of the (n-1)-th message plus the transmission duration of the (n-1)-th communication, with n = 2, 3, 4,....

7. The method according to one of claims 1 to 6, **characterized in that** two or more different classes of real-time messages are transmitted in the network, said different classes being distinguishable at least by the CM time interval (CMI) assigned to the messages of the respective class, wherein preferably real-time messages of a certain class being transmitted in the form of time-controlled messages are transmitted with a period duration that is a function of the CM time interval (CMI) of these real-time messages.

8. The method according to one of claims 1 to 7, **characterized in that** time-controlled messages (401, 403) are transmitted at the beginning of a CM time interval (CMI).

9. The method according to one of claims 1 to 8, **characterized in that** the bandwidth available for real-time messages can be arbitrarily divided between real-time messages that are time-controlled and real-time messages that are not time-controlled.

10. The method according to one of claims 1 to 9, **characterized in that** the time-controlled messages have at least the priority of the real-time messages or a higher priority.

11. The method according to one of claims 1 to 10, **characterized in that** time-controlled messages transmitted from the same computing node contain identical identification characteristics, such as the same StreamID.

12. The method according to one of claims 1 to 11, **characterized in that** the length of a CM time interval amounts to 125 microseconds or 250 microseconds.

13. The method according to one of claims 1 to 12, **characterized in that** the defined real-time bandwidth is limited to a maximum of 75% of the bandwidth available for real-time messages (402) within a CM time interval (CMI).

14. A computer network based on the IEEE 802.1Q standard configured for carrying out a method for transmitting messages according to one of claims 1 to 13.

**Revendications**

1. Procédé de transfert de messages dans un réseau informatique basé sur la norme IEEE 802.1Q, dans lequel le réseau informatique est composé d'un certain nombre de noeuds de calcul (101, 102, 103, 104), lesquels noeuds de calcul (101, 102, 103, 104) sont connectés entre eux par un ou plusieurs composants actifs (201), chaque noeud de calcul (101, 102, 103, 104) étant connecté par un câble de communication (301, 302, 303, 304) à un composant actif (201) et, en dehors des noeuds de calcul (101, 102, 103, 104), au moins une partie des messages étant échangée sous la forme de messages en temps réel (402),
étant associés aux messages en temps réel (402) des intervalles temporels définis de mesure de classe (CMI) d'une durée constante, et
la largeur de bande à disposition pour les messages en temps réel (402) étant limitée, dans un intervalle temporel CM (CMI), à une largeur de bande en temps réel définie,
**caractérisé en ce que**,

en outre, des noeuds de calcul (101, 103), des messages temporisés (401, 403 ; 401, 403, 404) sont envoyés,
des messages temporisés (401, 403 ; 401, 403, 404) étant envoyés périodiquement en fonction d'un planning défini par les noeuds de calcul (101, 103),

la durée de période (P ; P1, P2) des messages temporisés (401, 403 ; 401, 403, 404) est fonction de la durée des intervalles temporels CM (CMI),

les moments d'envoi de messages temporisés (401, 403 ; 401, 403, 404) qui sont envoyés par différents noeuds de calcul (101, 103) aux mêmes composants actifs (201) étant temporellement en phase décalée les uns par rapport aux autres de manière à ce que les messages temporisés (401, 403 ; 401, 403, 404) soient reçus par différents noeuds de calcul (101,103) à des moments différents (601, 602 ; 601, 602, 602'), c'est-à-dire dans des intervalles temporels ne se recoupant pas, dans le composant actif (201), et la somme des largeurs de bande occupées par des messages temporisés (401, 403 ; 401, 403, 404) et par des messages en temps réel (402) dans un intervalle temporel CM (CMI) ne dépasse pas la valeur pour la largeur de bande en temps réel, et au moins une partie des messages en temps réel d'une certaine classe, à savoir la classe de service A selon IEEE 802.1Q-2011, sont des messages temporisés (401, 403 ; 401, 403, 404).

2. Procédé selon la revendication 1, **caractérisé en ce que** les messages temporisés (401, 403 ; 401, 403, 404) sont envoyés par au moins deux des noeuds de calcul (101, 103).

3. Procédé selon la revendication 1 ou 2, **caractérisé en ce que** la durée de période (P ; P1, P2) des messages temporisés (401, 403 ; 401, 403, 404) est un multiple en nombre entier d'un intervalle temporel CM (CMI), ou **caractérisé en ce que** la durée de période des messages temporisés correspond à la durée d'un intervalle temporel CM (CMI) divisée par un nombre entier.

4. Procédé selon une des revendications 1 à 3, **caractérisé en ce que** tous les messages temporisés (401, 403 ; 401, 403, 404) sont envoyés avec la même durée de période (P), ou **caractérisé en ce que** des messages temporisés (401, 403 ; 401, 403, 404) d'une durée de période différente (P1, P2) sont envoyés par au moins deux noeuds de calcul (101, 103).

5. Procédé selon une des revendications 1 à 4, **caractérisé en ce que** les moments d'envoi de messages temporisés (401, 403) de même durée de période (P) sont choisis de manière à ce que les moments d'envoi de messages temporisés se succédant de noeuds de calcul différents (101, 103) sont espacés d'exactement ou d'au moins un laps de temps, lequel laps de temps correspond à la durée de période (P) divisée par le nombre de noeuds de calcul.

6. Procédé selon une des revendications 1 à 5, **caractérisé en ce que**, dans le cas d'un planning qui prévoit l'envoi de deux messages temporisés ou plus de noeuds de calcul différents (101, 103) dans un intervalle temporel CM (CMI), le planning prévoit en outre que le moment d'envoi du énième message temporisé se situe après l'expiration du moment d'envoi du (n-1)ième message plus la durée d'envoi du(n-1)ième message, sachant que n = 2, 3, 4, ...

7. Procédé selon une des revendications 1 à 6, **caractérisé en ce que** deux classes différentes l'une de l'autre ou plus de messages en temps réel sont envoyées dans le réseau, lesquels classes différentes se distinguant au moins par l'intervalle temporel CM (CMI) associé aux messages de la classe respective, les messages en temps réel d'une certaine classe qui sont envoyés sous forme de messages temporisés étant de préférence envoyés avec une durée de période qui est fonction de l'intervalle temporel CM (CMI) de ces messages en temps réel.

8. Procédé selon une des revendications 1 à 7, **caractérisé en ce que** les messages temporisés (401, 403) sont envoyés au début d'un intervalle temporel CM (CMI).

9. Procédé selon une des revendications 1 à 8, **caractérisé en ce que** la largeur de bande disponible pour les messages en temps réel est divisible à volonté entre des messages en temps réel temporisés et non temporisés.

10. Procédé selon une des revendications 1 à 9, **caractérisé en ce que** les messages temporisés présentent au moins la priorité des messages en temps réel ou une priorité supérieure.

11. Procédé selon une des revendications 1 à 10, **caractérisé en ce que** les messages temporisés qui sont envoyés par le même noeud de calcul contiennent des caractéristiques d'identification identiques, par exemple la même StreamID.

12. Procédé selon une des revendications 1 à 11, **caractérisé en ce que** la longueur d'un intervalle temporel CM est de 125 microsecondes ou 250 microsecondes.

13. Procédé selon une des revendications 1 à 12, **caractérisé en ce que** la largeur de bande en temps réel définie est limitée à un maximum de 75 % de la largeur de bande disponible pour les messages en temps réel (402) dans un intervalle temporel CM (CMI).

14. Réseau informatique basé sur la norme IEEE 802.1Q pour la réalisation d'un procédé selon une

**EP 2 920 923 B1**

des revendications 1 à 13 pour la transmission de messages.

101

301

102          201          304          104

302

**FIG. 1**

402

401

401    402

time

501

502

601

**FIG. 2**

**FIG. 3**

**FIG. 4**

**FIG. 5**

**FIG. 6**

**FIG. 7**

**FIG. 8**

404 ⌐□

403 ⌐□

402 ⌐□

401 ⌐□

time →

401  402  403  404

501

502

503

601  504

**FIG. 9**

| x | 93.75µs - x | 31.25µs | x | 93.75µs - x | 31.25µs | x | 93.75µs - x | 31.25µs | x | 93.75µs - x | 31.25µs |
|---|---|---|---|---|---|---|---|---|---|---|---|
| TT | dyn. AVB Class A | | TT | dyn. AVB Class A | | TT | dyn. AVB Class A | | TT | dyn. AVB Class A | |
| | 75% | | | 75% | | | 75% | | | 75% | |
| | 125µs | | | 125µs | | | 125µs | | | 125µs | |

**FIG. 10**

201

1101

1201

1101

1201

1401  1301

1402

...

1501

1101

1201

1403

**FIG. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- 802-1QAV-D7-0 Standard. IEEE-SA, 01. Oktober 2009, vol. 802.1